# EUROPEAN PATENT APPLICATION

(11) **EP 1 483 976 A2**
(43) Date of publication of application: **08.12.2004**
(21) Application number: 04460020.3
(22) Date of filing: 02.06.2004
(51) Int. Cl.: A23L 1/09, C13K 1/00, C13K 7/00, C13K 11/00, C13K 13/00

(54) **Carbohydrates composition**

(30) Priority: 05.06.2003 PL 36050903
(71) Applicant: Cargill Spolka z.o.o, 55-040 Kobierzyce (PL)
(72) Inventor: Musial, Dariusz, 50-361 Wroclaw (PL); Romaniuk, Jacek, 51-663 Wroclaw (PL)
(74) Representative: Rejman, Tadeusz (PL)

(57) **Abstract**

The object of the invention makes the carbohydrates composition intended in particular for the fermentation and alimentary industries.

Variety I of the carbohydrates composition is made of glucose, fructose, maltose, oligosaccharides and high sugars. This variety is characterized as containing 10-30% fructose by weight, 30- 50% glucose by weight, 5-25% maltose by weight and 1-20% saccharose by weight, the other part constituting high sugars.

Variety II of the carbohydrates composition is made of glucose, maltose, oligosaccharides and high sugars. This variety is characterized as containing 1 - 15% glucose by weight, 1-15% maltose by weight and 1-15% maltotriose by weight, the remaining part constituting high sugars.

Variety III of the carbohydrates composition is made of glucose, maltose, oligosaccharides and high sugars. This variety is characterized as containing 1 - 15% glucose by weight, 20-70% maltose by weight and 1-15% maltotriose by weight, the remaining part constituting high sugars.

Variety IV of the carbohydrates composition is made of glucose, fructose, maltose, oligosaccharides and high sugars. This variety is characterized as containing 35-60% fructose by weight, 35-60% glucose by weight, 1-10% maltose by weight and 0.1-5% maltotriose by weight, the other part constituting high sugars.

## Description

The object of the invention makes the carbohydrates composition intended in particular for the fermentation and alimentary industries.

The method of producing sugar products containing more than 50% fructose by weight, through the enzymatic transformation of saccharose, as presented in the patent description under No 121700, is known. This method consists in processing saccharose into a mixture containing dextrose, fructose and polysaccharides, and in the isomerization of the dextrose contained in that mixture into fructose through the action of isomerase enzyme and, next, in the hydrolysis of polysaccharides in the absence of isomerase enzyme. At the first process stage, saccharose is subjected to the action of the new fructosyl transferase enzyme at the temperature of 25-65°C with the value of pH equal to 4.5 - 6.5, whereafter the dextrose that is contained in the new product obtained, constituting a mixture of dextrose, fructose and polysaccharides containing at least 66% by weight of fructosyl groups connected with bonds, is transformed into fructose acting with isomeraze enzyme. On the other hand, the polysaccharides contained in this mixture are subjected to hydrolysis in the absence of isomeraze enzyme. The output product containing at least 20% saccharose by weight is subjected to the action of fructosyl transferaze enzyme. The fructosyl transferaze enzyme deriving from pullularia pullulans is used. The isomerization of dextrose is run using the glycose isomeraze enzyme deposited on a carrier.

Variety I of the carbohydrates composition is made of glucose, fructose, maltose, oligosaccharides and high sugars. This variety is characterized as containing 10-30% fructose by weight, 30- 50% glucose by weight, 5-25% maltose by weight and 2-20% saccharose by weight, the other part constituting high sugars.

Variety II of the carbohydrates composition is made of glucose, maltose, oligosaccharides and high sugars. This variety is characterized as containing 1 - 15% glucose by weight, 1-15% maltose by weight and 1-15% maltotriose by weight, the remaining part constituting high sugars. The glucose equivalent of this composition is 20 to 34.

Variety III of the carbohydrates composition is made of glucose, maltose, oligosaccharides and high sugars. This variety is characterized as containing 0.1-1% glucose by weight, 20-70% maltose by weight and 1-20% maltotriose by weight, the remaining part constituting high sugars. The glucose equivalent of this composition is 30 to 60.

Variety IV of the carbohydrates composition is made of glucose, fructose, maltose, oligosaccharides and high sugars. This variety is characterized as containing 35-60% fructose by weight, 35-60% glucose by weight, 1-10% maltose by weight and 0.1-5% maltotriose by weight, the other part constituting high sugars. The sum of the high sugars contents is 15% by weight maximum. The sum of the glucose, maltose and maltotriose contents is at least 80% by weight.

The carbohydrates compositions according to the invention are very useful in the alimentary industry owing to their properties.

The carbohydrates composition according to variety I is characterized by a low viscosity and a high sweetness at the same time, which allows its use in the alimentary industry as sweetener. The low viscosity is extremely advantageous in its industrial application since this facilitates the transportation of liquid composition using pumps and pipelines. Moreover, this composition is characterized by the missing susceptibility to crystallization, which facilitates its storage at low temperatures. This composition may be used in high-concentration products; in particular it may be used for flavourings for beverages.

The carbohydrates composition according to variety II is characterized by a high viscosity, owing to which it may be used for the manufacture of solid products such as candies or coffee creamer. Besides, this composition is characterized by a low sweetness.

The carbohydrates composition according to variety III is characterized by a moderate viscosity and a moderate sweetness. It may be used for the manufacture of hard candies, which results in better storage properties of those candies due to low hygroscopic properties of the composition. The sweetness of the composition allows its use as sweetener in the alimentary industry. The high maltose content in the composition contributes to the high fermentation capacities, owing to which the composition is very useful for the industry where the production process requires the fermentation process.

The carbohydrates composition according to variety IV is characterized by a low viscosity despite a very high content of sugar products. The low viscosity is particularly advantageous in its industrial application since this facilitates the transportation of liquid composition using pumps and pipelines. Besides, the low viscosity favourably influences its blending with other constituents without the need to warm up. The high content of sugar products results in the composition being characterized by a high sweetness. At the same time, it exhibits fermentation capacities, owing to which the composition is very useful for the industry where the production process requires the fermentation process.

The compositions according to the invention are explained in details in the examples of their execution.
An example of the carbohydrates composition according to variety I:
- fructose 24%
- glucose 42%
- maltose 14%
- sacharose 11%
- rest: high sugars
An example of the carbohydrates composition according to variety II:
- glucose 10%
- maltose 10%
- maltotriose 9%
- rest: high sugars
With such a make-up of the carbohydrates composition the glucose equivalent is 30.8.
Examples of the carbohydrates according to variety III:
Example 1
   - glucose 2%
   - maltose 35%
   - maltotriose 11 %
   - rest: high sugars
   With such a make-up of the carbohydrates composition the glucose equivalent is 36.9.
Example 2
   - glucose 5%
   - maltose 35%
   - maltotriose 16%
   - rest: high sugars
   With such a make-up of the carbohydrates composition the glucose equivalent is 46.
Example 3
   - glucose 8%
   - maltose 70%
   - maltotriose 12%
   - rest: high sugars
With such a make-up of the carbohydrates composition the glucose equivalent is 56.
Examples of the carbohydrates compositions according to variety IV:
Example 1
   - fructose 55%
   - glucose 52%
   - maltose 3,5%
   - maltotriose 1%
   - rest: high sugars
Example 2
   - fructose 45%
   - glucose 45%
   - maltose 5%
   - maltotriose 2%
   - rest: high sugars
Example 3
   - fruktose 55%
   - glukose 40%
   - maltose 3,5%
   - maltotriose 1%
   - rest: high sugars

## Claims

1. A carbohydrates composition made of glucose, fructose, maltose, oligosaccharides and high sugars, **characterized in that** it contains 10-30% fructose by weight, 30- 50% glucose by weight, 5-25% maltose by weight and 1-20% saccharose by weight, the remaining part constituting high sugars.

2. A carbohydrates composition made of glucose, maltose, oligosacccharides and high sugars, **characterized in that** it contains 1 - 15% glucose by weight, 1-15% maltose by weight and 1-15% maltotriose by weight, the remaining part constituting high sugars.

3. A carbohydrates composition of claim 2, wherein the composition glucose equivalent is 20 to 34.

4. A carbohydrates composition made of glucose, maltose, oligosaccharides and high sugars, **characterised in that** it contains 0.1 - 15% glucose by weight, 20-70% maltose by weight and 1-20% maltotriose by weight, the remaining part constituting high sugars.

5. A carbohydrates composition of claim 4, **characterised in that** the composition glucose equivalent is 30 to 60.

6. A carbohydrates composition made of glucose, fructose, maltose, oligosaccharides and high sugars, **characterised in that** it contains 35-60% fructose by weight, 35-60% glucose by weight, 1-10% maltose by weight and 1-5% maltotriose by weight, the remaining part constituting high sugars.

7. A composition of claim 6, **characterised in that** the sum of the high sugars contents amounts to 15% by weight maximum.

8. A composition of claim 6, **characterized in that** the sum of the fructose, glucose, maltose and maltotriose contents amounts to at least 80% by weight.
